# EUROPEAN PATENT APPLICATION

(11) **EP 2 436 565 A1**
(43) Date of publication of application: **04.04.2012**
(21) Application number: 10185465.1
(22) Date of filing: 01.10.2010
(51) Int. Cl.: B60R 21/34

(54) **Deformation control bracket**

(71) Applicant: Volvo Car Corporation, 405 31 Göteborg (SE)
(72) Inventor: Landholm, Robert, 45991, Ljungskile (SE); Lindmark, Peter, 42243, Hisings Backa (SE)

(57) **Abstract**

The invention relates to a deformation control bracket (1) for absorbing an impact force. The deformation control bracket (1) has a hollow profile shape which is formed by a peripheral surface (2a, 2b, 2c, 2d, 2e, 2f) having a number of arranged folds (3a, 3b, 3c, 3d, 3e, 3f) which are arranged substantially parallel to a centre axis (4) through said deformation control bracket (1). The peripheral surface (2a, 2b, 2c, 2d, 2e, 2f) and said folds (3a, 3b, 3c, 3d, 3e, 3f) form one homogenous unit having a closed cross-section such that upon said impact force acts against said peripheral surface (2a, 2b, 2c, 2d, 2e, 2f) of said deformation control bracket (1), said deformation control bracket (1) may be brought to collapse in a controlled manner at one or more of said arranged folds (3a, 3b, 3c, 3d, 3e, 3f).

## Description

### TECHNICAL FIELD

The present invention relates to a deformation control bracket for absorbing an impact force in accordance with the preamble of claim 1.

### BACKGROUND OF THE INVENTION

A vehicle comprises a number of body panels which are attached to the vehicle. The body panels may be painted in desired colors and may function as an outer shell for the vehicle. The body panels may be connected to the vehicle directly against a structure of the vehicle or indirectly via brackets which are connected to the structure. Sometimes, unfortunately, an object, e.g. a human being, accidently may impact with the vehicle. Such impacts may result in severe damages to the impacting object. Attempts have been made to make the body panels able to flex. Upon an impact against the body panel a force from the impact may partly be absorbed by the body panel or an element upholding the body panel. This has e.g. been made by using flexible brackets between the structure and the body panel of the vehicle. The purpose of such flexible brackets has been to attempt to absorb at least some of the impact force from the impacting object, and thus reducing damages to the object.

Patent document DE 10308371 A1 discloses a bracket supporting a body panel of a vehicle. The bracket in accordance with DE 10308371 A1 consists of a number of different elements which are joined together forming the bracket. An impacting force may be partly absorbed via intermediate elements within the brackets of DE 10308371 A1.

Cost for producing brackets is of significant importance. Brackets comprising a number of different elements are usually expensive to produce. This not only because of the number of different elements, but also because the elements need to be assembled to form a bracket. Brackets which consists of multiple elements may upon an impact become disconnected from each other whereby the bracket may not be able to correctly absorb an impact force.

A drawback with prior art brackets is that in order to uphold a rigidity of the body panel of the vehicle, the brackets are usually made robust and stiff. This drawback results in that the brackets upon an impact are unable to flex and hence unable to absorb an impact force..

### SUMMARY OF THE INVENTION

An object of the invention is to provide a deformation control bracket which upon assembly to a vehicle, more particularly a vehicle front part, is arranged such that any surface of the deformation control bracket may face either a structure of the vehicle or a body panel of the vehicle.

Another object of the invention is to provide a deformation control bracket which may be made from one homogeneous piece of material and only have one single connection surface against the structure of the vehicle and one single connection surface against the body panel of the vehicle.

Another object of the invention is to provide a deformation control bracket which is possible to produce in a short time compared to production of known brackets whereby the production costs may be reduced..

These and other objects may be achieved by a deformation control bracket in accordance with claim 1.

As such, the present invention relates to a deformation control bracket for absorbing an impact force, said deformation control bracket having a hollow profile shape which is formed by a peripheral surface having a number of arranged folds which are arranged substantially parallel to a centre axis through said deformation control bracket. In accordance with the invention, said peripheral surface and said folds form one homogenous unit having a closed cross-section, such that upon said impact force acts against said peripheral surface, said deformation control bracket will be brought to collapse in a controlled manner at one or more of said arranged folds.

An advantage of the present invention is that the deformation control bracket may be made from an extruded longitudinal bar or beam element. The bar element may in its longitudinal direction comprise the features of the deformation control bracket. A deformation control bracket is made from the bar element by cutting single pieces from the bar element. Each single piece will then form a deformation control bracket. After being cut off from the bar element, the deformation control bracket may not require further machining with respect to its geometry. This because the geometry of the deformation control bracket with respect to i.a. internal angles and edges is achieved upon an extrusion of the bar element prior to being cut into the deformation control brackets.

Another advantage of the present invention is that the time for assembly of the deformation control bracket against the vehicle may be reduced. This because the orientation of the deformation control bracket does not have to be taken in to consideration when attaching the deformation control bracket against the structure of the vehicle. A further advantage is that the deformation control bracket may be connected to the structure using only one surface. Simultaneously, for connecting against the body panel is also only one surface required of the deformation control bracket.

According to the present invention, said deformation control bracket in said cross-section may have a substantially hexagonal shape. A hexagonal shape or structure has the advantage that a strong internal structure of the deformation control bracket is achieved. This internal strength enables that material for creating the deformation control bracket may be either thin or a material of fairly low cost. Low cost materials may sometimes have a reduced strength compared to more expensive and exclusive materials.

According to the present invention, said deformation control bracket along said centre axis may have a cylindrical shape. The cylindrical shape along said centre axis is achieved due to that the respective deformation control bracket origin from the bar element.

According to the present invention, said deformation control bracket may comprise six longitudinally arranged folds. The hexagonal shape of the deformation control bracket is achieved due to that the deformation control bracket comprises six elements being adjoined together via e.g. six folds or joints.

According to the present invention, said folds in said deformation control bracket may have substantially the same length with respect to each other. This because each single piece forming the deformation control bracket may be cut from the bar element. This may be achieved by that the cutting may be performed perpendicular through the bar element with respect to an elongation of the bar element.

According to the present invention, a first fold of said folds may comprise at least one first opening or hole. The opening in the fold is provided for adjusting the stiffness of the deformation control bracket. The size of the opening may however be varied. A large opening in the fold may provide the deformation control bracket to have a low stiffness structure whereby at a low impact of force the deformation control bracket may collapse. Contrary, a small opening may instead provide the opposite effect with respect how easyily the deformation control bracket may collapse. Consequently, in order for the deformation control bracket to collapse being provided with a small opening, the deformation control bracket may need to be affected by a larger force than for the above situation where the deformation control bracket is provided with a large opening. It shall be noted that it may be of importance to be able to control or adjust the stiffness of the deformation control bracket dependent on where the deformation control bracket is to be arranged within the vehicle. A deformation control bracket at one location within the vehicle may have to be able to withstand one level of forces. Another deformation control bracket at another location within the vehicle may have to be able to withstand a different magnitude force. The size of the opening in one deformation control bracket may therefore be different compared to another deformation control bracket opening as they may have to be able to withstand different magnitude forces.

According to the present invention, said first opening may be a slot extending within said first fold and being parallel to said centre axis. Upon deformation, the peripheral surfaces of the deformation control bracket may move in directions being substantially perpendicular to the centre axis through the deformation control bracket. As the slot is arranged parallel to the centre axis along the fold, the fold may hence function as a hinge between the adjacent peripheral surfaces.

According to the present invention, a second fold of said folds may be arranged with a second opening. Said second opening may be a slot extending within said second fold and being parallel to said centre axis. Further, said first and second openings in said deformation control bracket may be arranged opposite to each other. Hence, the openings in the deformation control bracket being opposite each other may have a symmetrical arrangement with respect to each other. When the deformation control bracket is exposed to a force deforming the deformation control bracket, the deformation may occur on opposite elements of the deformation control bracket.

According to the present invention, said peripheral surface may comprise a lower fixation surface and an upper fixation surface being arranged opposite each other. The lower fixation surface may be arranged for attaching the deformation control bracket against the frame or structure of the vehicle. The upper fixation surface may be arranged for attaching the deformation control bracket against a body panel or alike whereby the body panel indirectly may be attached to the vehicle. When the deformation control bracket collapse, a respective backside of the respective fixation surfaces may move towards each other.

According to the present invention, said deformation control bracket may be made from aluminium. The deformation control bracket may be made from an extruded aluminium beam or bar element which may be cut up in pieces forming the deformation control brackets. Use of aluminium may be advantageous as it is a material which may easily be used for extrusion. Aluminium and other materials having similar characteristics has a fairly low melting point and thus allow for simple machining.

According to a second aspect of the present invention, a vehicle front part may comprise a deformation control bracket according to the first aspect of the present invention where said lower fixation surface of said deformation control bracket is adapted to be affixed to a structure of the vehicle front part by welding or gluing or brazing.

According to the second aspect of the present invention, said upper fixation surface is adapted to be fixed to a body panel by one or more attachment means.

According to the second aspect of the present invention, said deformation control bracket at said vehicle front part may be arranged such that its centre axis has an extension substantially transverse to a longitudinal extension of the vehicle.

### BRIEF DESCRIPTION OF THE DRAWINGS

The present invention will hereinafter be explained in greater detail by means of nonlimiting examples and with reference to the appended drawings in which:
- Fig. 1: illustrates a vehicle front part having three deformation control brackets connecting a body panel to a structure of the vehicle,
- Fig. 2: illustrates a vehicle front part having at least one deformation control bracket which has been deformed due to an impacting force caused by a head impacting against a body panel of the vehicle,
- Fig. 3: illustrates a deformation control bracket arranged between a body panel and a structure of a vehicle.

It should be noted that the appended drawings are not necessarily drawn to scale and that the dimensions of some features of the present invention may have been exaggerated for the sake of clarity.

### DETAILED DESCRIPTION OF PREFERRED EMBODIMENTS

The invention will, in the following, be exemplified by embodiments. It is to be understood, however, that the embodiments are included in order to explain principles of the invention and not to limit the scope of the invention defined by the appended claims.

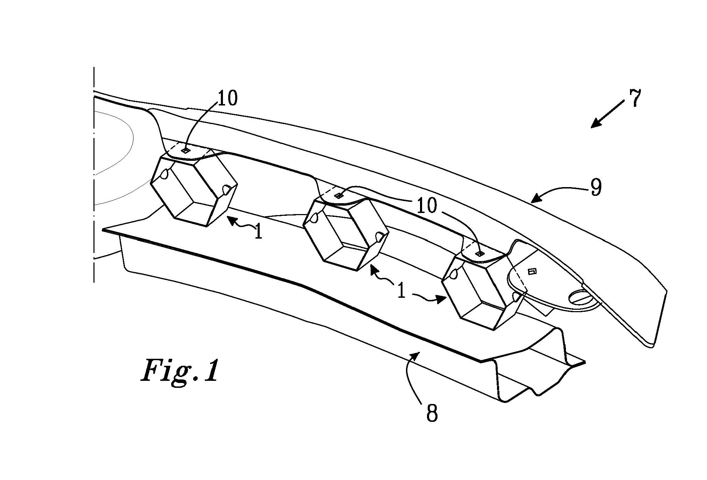

Fig 1 illustrates a number of deformation control brackets 1 being arranged at a vehicle front part 7. The deformation control brackets 1 are arranged between a structure 8, or chassis, of the vehicle and a body panel 9. The deformation control brackets 1 are attached to the body panel 9 via attachment means 10 such that the body panel 9 is connected to the vehicle.

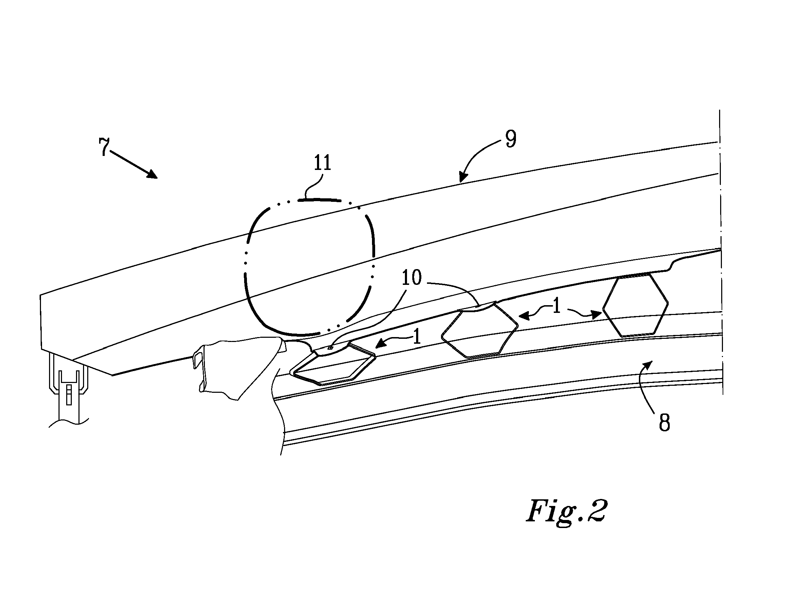

Fig. 2 illustrates a situation where the deformation control brackets 1 have been deformed. An impacting force from an impacting object 11 has, in Fig. 2, deformed the deformation control brackets 1. In Fig. 2 the impacting object 11 may be represented by e.g. a head of a pedestrian, which head or body accidently impacts into the body panel 9 of the vehicle front part 7. Upon deformation of the deformation control bracket 1 the impacting force may be absorbed by the deformation control bracket 1. The deformation control brackets 1 are attached to the structure 8 and to the body panel 9 of the vehicle. Thereby, upon an impact where the deformation control brackets 1 are deformed, the deformation control brackets may remain in position with respect to the structure 8.

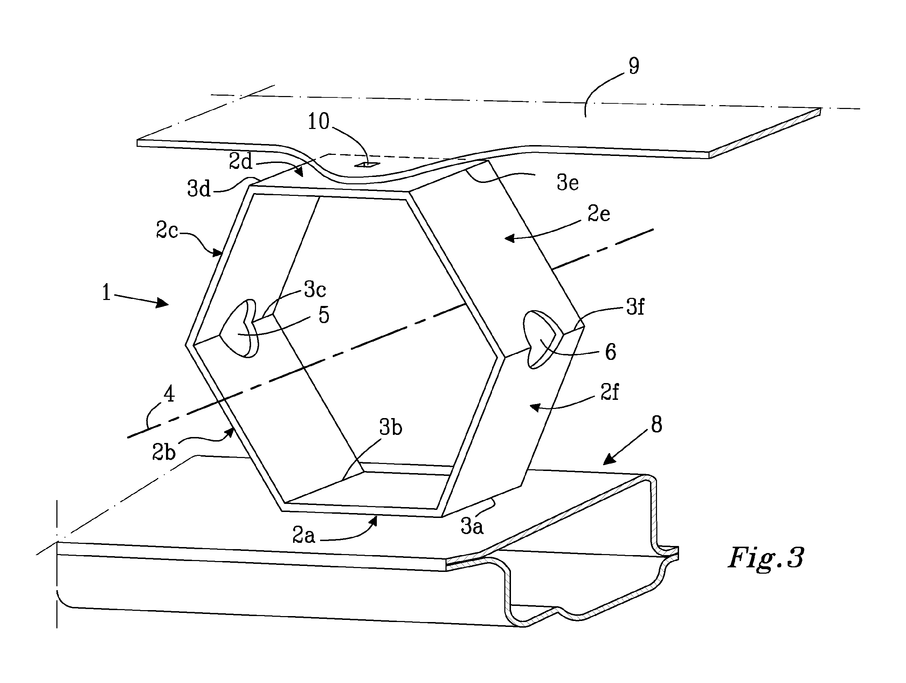

Fig. 3 illustrates a deformation control bracket 1 configured for being arranged between the structure 8 of the vehicle and the body panel 9. The deformation control bracket 1 has a hollow profile shape which is formed by six peripheral surfaces 2a, 2b, 2c, 2d, 2e, 2f having a number of arranged folds 3a, 3b, 3c, 3d, 3e, 3f. Each respective fold 3a, 3b, 3c, 3d, 3e, 3f is arranged between two adjacent peripheral surfaces 2a, 2b, 2c, 2d, 2e, 2f. The folds 3a, 3b, 3c, 3d, 3e, 3f of the deformation control bracket 1 are substantially parallel to a centre axis 4 through the deformation control bracket 1. The peripheral surface 2a, 2b, 2c, 2d, 2e, 2f and said folds 3a, 3b, 3c, 3d, 3e, 3f form one homogenous unit having a closed cross-section.. When an impact force acts against the peripheral surface 2a, 2b, 2c, 2d, 2e, 2f, the closed cross-section of the deformation control bracket 1 allows said deformation control bracket 1 to be brought to collapse in a controlled manner at one or more of said arranged folds 3a, 3b, 3c, 3d, 3e, 3f.

The deformation control bracket 1 comprises six longitudinally arranged folds 3a, 3b, 3c, 3d, 3e, 3f. Each fold 3a, 3b, 3c, 3d, 3e, 3f has substantially the same length with respect to each other. Each respective fold 3a, 3b, 3c, 3d, 3e, 3f is arranged between two adjacent peripheral surfaces 2a, 2b, 2c, 2d, 2e, 2f. I.e. the respective folds 3a, 3b, 3c, 3d, 3e, 3f connects two adjacent peripheral surfaces 2a, 2b, 2c, 2d, 2e, 2f to each other. As seen in a cross-section through the deformation control bracket 1, the deformation control bracket 1 has a substantially hexagonal shape. The deformation control bracket 1 may have a cylindrical shape along said centre axis 4.

In a first fold 3c of said folds 3a, 3b, 3c, 3d, 3e, 3f is arranged a first opening 5. In a second fold 3f of said folds 3a, 3b, 3c, 3d, 3e, 3f is arranged a second opening 6. The respective openings 5, 6 weakens the respective folds whereby the two respective adjacent peripheral surfaces 2b, 2c and 2e, 2f may fold towards each other. Without the openings 5, 6 the deformation control bracket 1 may be too stiff and may not collapse appropriately upon an impact against the deformation control bracket 1. In order to achieve a uniform distribution of forces in the deformation control bracket 1 during collapse, the first and second openings 5, 6 may be arranged opposite to each other.

The openings 5, 6 may have different shapes. As exemplified in Fig 3 the openings may e.g. be circular. However, other shapes may be suitable for the openings 5, 6. The openings 5, 6 may e.g. be shaped or formed as slots. The slot or slots may be arranged such that they extend within the fold. Further, the slot or slots may have an extension parallel to said centre axis 4.

The deformation control bracket 1 may be made from aluminium. Pieces are cut off from a beam of extruded aluminium to form the deformation control brackets 1. The beam may, prior to being cut into pieces for the deformation control brackets 1 have been extruded such that the beam has received a hexagonal cross-sectional shape.

The deformation control bracket 1 may be arranged between the structure 8 and the body panel 9 in the vehicle. One of the peripheral surfaces 2a, 2b, 2c, 2d, 2e, 2f may comprise of a lower fixation surface 2a. Another of the peripheral surfaces 2a, 2b, 2c, 2d, 2e, 2f may comprise of an upper fixation surface 2d. The lower fixation surface 2a and the upper fixation surface 2d may be arranged opposite each other in the deformation control bracket 1. For this reason, the lower fixation surface 2a and the upper fixation surface 2d, may upon an impact thus move, or collapse, towards each other.

The lower fixation surface 2a of the deformation control bracket 1 may be fixed to the structure 8 of the vehicle front part 7 e.g. by welding, gluing or brazing. The upper fixation surface 2d may be fixed to the body panel 9 by an attachment mean 10. The attachment mean 10 may comprise of e.g. one or more bolts and/or nuts or screw elements which secures the body panel 9 against the upper fixation surface 2d. Other adjoining methods, equivalent to welding, gluing or brazing, may however be used for attaching the lower fixation surface 2a against the structure 8. In most cases of accidents it is the body panel 9 which becomes damaged and needs to be replaced, removed and/or repaired. The body panel 9 is therefore attached to the deformation control bracket 1 using said attachment means 10. This to enable the body panel 9 to be easily removed from the deformation control brackets 1.

In the vehicle front part 7, see Fig. 1, the deformation control brackets 1 may be arranged such that their respective centre axis 4 may have an extension crossing the vehicle front part 7, whereby the respective extension may be substantially perpendicular to a respective long side of the vehicle front part 7. It may be desirable to have the deformation control brackets 1 arranged such that a force impacting against the deformation control bracket 1 has a direction which is substantially perpendicular to the centre axis 4 of the respective deformation control bracket 1. Thereby the deformation control bracket 1 will collapse in a controlled manner. However, the difficulty in predicting the direction of an impacting force should be noted as the impact of an object against the vehicle may differ dependent on the situation. How to arrange the deformation control brackets 1 in the vehicle may therefore be determined from a statistical perspective of which direction an impact force most likely will have if an accident between the vehicle and the object would occur.

While there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A deformation control bracket (1) for absorbing an impact force, said deformation control bracket (1) having a hollow profile shape which is formed by a peripheral surface (2a, 2b, 2c, 2d, 2e, 2f) having a number of arranged folds (3a, 3b, 3c, 3d, 3e, 3f) which are arranged substantially parallel to a centre axis (4) through said deformation control bracket (1), **characterised in that** said peripheral surface (2a, 2b, 2c, 2d, 2e, 2f) and said folds (3a, 3b, 3c, 3d, 3e, 3f) form one homogenous unit having a closed cross-section, such that upon said impact force acting against said peripheral surface (2a, 2b, 2c, 2d, 2e, 2f), said deformation control bracket (1) will be brought to collapse in a controlled manner at one or more of said arranged folds (3a, 3b, 3c, 3d, 3e, 3f).

2. The deformation control bracket (1) according to claim 1, **characterised in that** said deformation control bracket (1) in said cross-section has a substantially hexagonal shape.

3. The deformation control bracket (1) according to any one of claims 1 - 2, **characterised in that** said deformation control bracket (1) along said centre axis (4) has a cylindrical shape.

4. The deformation control bracket (1) according to any one of claims 1 - 3, **characterised in that** said deformation control bracket (1) comprises six longitudinally arranged folds (3a, 3b, 3c, 3d, 3e, 3f).

5. The deformation control bracket (1) according to any one of claims 1 - 4, **characterised in that** said folds (3a, 3b, 3c, 3d, 3e, 3f) in said deformation control bracket (1) has substantially the same length with respect to each other.

6. The deformation control bracket (1) according to any one of claims 1 - 5, **characterised in that** a first fold (3c) of said folds (3a, 3b, 3c, 3d, 3e, 3f) comprises at least one first opening (5).

7. The deformation control bracket (1) according to claim 6, **characterised in that** said first opening (5) is a slot extending along said first fold (3c) and in parallel to said centre axis (4)

8. The deformation control bracket (1) according to any one of claims 6 - 7, **characterised in that** a second fold (3f) of said folds (3a, 3b, 3c, 3d, 3e, 3f) is arranged with a second opening (6).

9. The deformation control bracket (1) according to claim 8, **characterised in that** said second opening (6) is a slot extending along said second fold (3f) and in parallel to said centre axis (4).

10. The deformation control bracket (1) according to any one of claims 8 - 9, **characterised in that** said first and second openings (5, 6) in said deformation control bracket (1) are arranged opposite to each other.

11. The deformation control bracket (1) according to any one of claims 1 - 10, **characterised in that** said peripheral surface (2a, 2b, 2c, 2d, 2e, 2f) comprises a lower fixation surface (2a) and an upper fixation surface (2d) arranged opposite each other.

12. The deformation control bracket (1) according to any one of claims 1 - 11, **characterised in that** said deformation control bracket (1) is made from aluminium.

13. A vehicle front part (7) comprising a deformation control bracket (1) according to any one of claims 1 - 11, **characterised in that** said lower fixation surface (2a) of said deformation control bracket (1) is affixed to a structure (8) of the vehicle front part (7) by welding or gluing or brazing.

14. A vehicle front part (7) according to claim 13, **characterised in that** said upper fixation surface (2d) is fixed to a body panel (9) by at least one attachment mean (10).

15. A vehicle front part (7) according to any one of claims 13 - 14, **characterised in that** said deformation control bracket (1) is arranged in said vehicle front part (7) such that its centre axis (4) has an extension substantially transverse to a longitudinal extension of the vehicle.
